# EUROPÄISCHE PATENTSCHRIFT

(11) **EP 2 860 365 B1**
(45) Veröffentlichungstag und Bekanntmachung des Hinweises auf die Patenterteilung: **08.05.2019**
(21) Anmeldenummer: 14003429.9
(22) Anmeldetag: 06.10.2014
(51) Int. Cl.: F01M 13/04, B01D 45/08, B01D 50/00

(54) **Ölnebelabscheider**
Oil mist separator
Épurateur de brouillard d'huile

(30) Priorität: 08.10.2013 AT 7732013
(43) Veröffentlichungstag der Anmeldung: 15.04.2015
(73) Patentinhaber: Innio Jenbacher GmbH & Co OG, 6200 Jenbach (AT)
(72) Erfinder: Wall, Guenther, 6323 Bad Häring (AT); Laubach, Johannes, 6116 Weer (AT); Madl, Wolfgang, 6094 Axams (AT); Trenkwalder, Thomas, 6067 Absam (AT)
(74) Vertreter: Torggler & Hofinger Patentanwälte

(56) Entgegenhaltungen:
- EP-A1- 1 068 890
- CN-A- 103 249 923
- DE-A1-102010 032 539
- JP-A- H11 107 738
- JP-A- 2010 248 934
- JP-U- S 535 635
- JP-U- S6 293 108
- US-A1- 2002 100 464

## Beschreibung

Die Erfindung betrifft einen Ölnebelabscheider zum Abscheiden von in einem Trägergas, insbesondere Kurbelgehäuseentlüftungsgas einer Brennkraftmaschine, enthaltenem Öl, mit den Merkmalen des Oberbegriffs des Anspruchs 1.

Beim Betrieb einer Brennkraftmaschine entstehen bekannterweise sogenannte Blow-By-Gase, die aus einem Kurbelgehäuse der Brennkraftmaschine abzuführen sind, um ein Ansteigen des Drucks im Kurbelgehäuse und ein unerwünschtes Austreten von Blow-By-Gas und darin enthaltenem Öl zu vermeiden. In geschlossenen Kurbelgehäuseentlüftungssystemen wird dieses Kurbelgehäuseentlüftungsgas bzw. das sich im Kurbelgehäuse aus den Blow-By-Gasen ergebende und Öl umfassende Trägergas zu einem Lufteinlass der Brennkraftmaschine rückgeführt, wobei der Druck im Kurbelgehäuse üblicherweise innerhalb von vorgegebenen Bauteilgrenzwerten gehalten wird. Das Trägergas enthält jedoch feine Öltröpfchen und Feststoffpartikel in der Größenordnung von etwa 0,1 µm bis 10 µm.

Um negative Auswirkungen dieses im Trägergas enthaltenen Öls auf Komponenten im Lufteinlass der Brennkraftmaschine zu vermeiden, ist es bereits bekannt, das Öl und die Feststoffpartikel aus dem Trägergas abzuscheiden. Zu diesem Zweck kommen unter anderem Filtervorrichtungen gemäß dem Oberbegriff des Anspruchs 1 zum Einsatz, welche vom Trägergas durchströmbare Filtereinsätze aus einem Drahtgewirk bzw. Drahtgestrick umfassen. Solche Filtervorrichtungen erreichen jedoch aufgrund der zugrundeliegenden Abscheidemechanismen und dem konstruktionsbedingten Aufbau eines solchen Drahtgewirks bzw. Drahtgestricks bei kleinen Tropfen- oder Partikelgrößen (insbesondere im Korngrößenbereich < 1 µm) nur einen begrenzten Abscheidegrad. Der Filtervorrichtung nachgeschaltet kann daher ein Feinfilter (z.B. Coalescer-Filter) zum Einsatz kommen, der kleinere Öltröpfchen als der Abscheider ausfiltern kann.
Die CN 201198776 (Y) zeigt einen Blow-By-Filter, bestehend aus einem Gehäuse und Filtereinsätzen, die zwischen Prallplatten angeordnet sind. Ungünstig sind hier die Strömungsrichtung des Blow-By-Gases und die starre, da vergossene Anordnung der Prallplatten.
Aus der JP 2010248934 (A) ist ein Ölabscheider mit Maßnahmen für verbesserte Ölabscheidewirkung bekannt.

Die JP 2001200713 A zeigt einen Ölabscheider mit einer gelochten Prallplatte.
Die CN 103249923 zeigt einen Ölnebelabscheider für ein Blowby-Gas einer Brennkraftmaschine, wobei in einem Raum zur Gas-Flüssigkeits-Abscheidung Leiteinrichtungen vorgesehen sind.
Die JP S53 5635 U zeigt ein Filtergehäuse, in dem ein Filtereinsatz lösbar anordenbar ist.
Die JP S62 93108 U zeigt eine Filtervorrichtung, wobei zwischen Filtereinsätzen beabstandet Lochbleche angeordnet sind.

Aufgabe der Erfindung ist es, einen gegenüber dem Stand der Technik verbesserten Ölnebelabscheider anzugeben.

Diese Aufgabe wird erfindungsgemäß durch einen Ölnebelabscheider mit den Merkmalen des Anspruchs 1 gelöst. Vorteilhafte Ausgestaltungen der Erfindung sind in den abhängigen Ansprüchen angegeben.

Gemäß der Erfindung ist also vorgesehen, dass die wenigstens eine Filtervorrichtung lösbar im Ölnebelabscheider anordenbar ist, wobei vorzugsweise zwischen einer ersten Befestigungsfläche des Ölnebelabscheiders und einer daran zu befestigenden zweiten Befestigungsfläche der Filtervorrichtung eine - vorzugsweise im Wesentlichen umlaufende - Dichtung vorgesehen ist.
Dadurch kann eine Umgehung der Filtervorrichtung durch daran vorbeiströmende Anteile des Trägergases vermieden werden.
Zur Erhöhung einer Strömungsgeschwindigkeit des Trägergases und/oder zur Erzielung eines verlängerten, labyrinthartigen Strömungspfades des Trägergases durch den wenigstens einen Filtereinsatz ist wenigstens ist eine Leitvorrichtung vorgesehen, durch die der Strömungspfad umlenkbar ist.

Durch die wenigstens eine entlang der Strömungsrichtung angeordnete Leitvorrichtung erfolgt eine Reduktion des dem Trägergas zur Verfügung stehenden Strömungsquerschnitts auf eine entsprechend reduzierte, vom Trägergas durchströmbare Querschnittsfläche. Diese Querschnittsreduktion führt zu einer erhöhten Strömungsgeschwindigkeit des Trägergases und somit zu einer erhöhten Ölabscheidung im Filtereinsatz. Durch die Umlenkung des Trägergases an den Leitvorrichtungen kann insbesondere bei einer entsprechend erhöhten Strömungsgeschwindigkeit des Trägergases - von beispielsweise mehr als 0,9 m/s - eine erhöhte Ölabscheidung bewirkt werden.

Vorzugsweise kann vorgesehen sein, dass die wenigstens eine Leitvorrichtung als - vorzugsweise plattenförmige - Blende ausgebildet ist. Die wenigstens eine Leitvorrichtung kann dabei am Gehäuse angebracht, vorzugsweise angeschweißt, angeklebt oder angeschraubt, sein und wenigstens eine Öffnung begrenzen, die eine vom Trägergas durchströmbare Querschnittsfläche bildet. Die durch die wenigstens eine Öffnung gebildete, vom Trägergas durchströmbare Querschnittsfläche kann dabei im Fall einer plattenförmigen Blende parallel zur Ebene der Platte verlaufen. Insbesondere bei plattenförmigen Leitvorrichtungen können die Filtereinsätze einfach in das Gehäuse eingelegt werden und brauchen nicht notwendigerweise selbst mit dem Gehäuse verbunden oder versiegelt werden.

In einer bevorzugten Ausführungsvariante kann vorgesehen sein, dass der wenigstens eine Filtereinsatz aus einem Gewebe, Geflecht, Gestrick, Gewirk oder Vlies gebildet ist, das aus wenigstens einem Filterdraht oder wenigstens einer Filterfaser mit einem Durchmesser kleiner 0,2 mm, vorzugsweise kleiner 0,1 mm, aufgebaut ist. Bei kleinen Tropfengrößen hängt der Abscheidegrad des Filtereinsatzes vom Durchmesser der Filterdrähte bzw. der Filterfasern ab. Kleine Draht- bzw. Faserdurchmesser erhöhen den Abscheidegrad des Filtereinsatzes.

Vorzugsweise kann vorgesehen sein, dass ein Volumenanteil des wenigstens einen Filterdrahts oder der wenigstens einen Filterfaser im Filtereinsatz etwa 2% bis 5%, vorzugsweise im Wesentlichen 4%, beträgt. Je nach Wahl des Volumenanteils der Filterdrähte bzw. Filterfasern kann Einfluss auf den Abscheidegrad des Filtereinsatzes genommen werden. Ein erhöhter Volumenanteil wird jedoch einen erhöhten Druckverlust über den Filtereinsatz bewirken. Daher ist es sinnvoll, bei der Dimensionierung des Volumenanteils der Filterdrähte bzw. Filterfasern sowie bei der Dimensionierung des durch die wenigstens eine Leitvorrichtung hervorgerufenen verlängerten Strömungspfads eventuell vorgegebene Grenzwerte für einen maximalen Druckabfall durch die Filtervorrichtung zu berücksichtigen.

Durch die vorgeschlagene Dimensionierung des Filtereinsatzes kann eine besonders wirksame Abscheidung von Öl aus einem Trägergas erzielt werden. Versuche der Anmelderin haben gezeigt, dass mit der vorgeschlagenen Dimensionierung eine hohe Reduktion der im Trägergas enthaltenen Ölmasse herbeigeführt werden kann, wodurch sich die Ölbelastung für nachgeschaltete Feinfilter, wie beispielsweise Coalescer-Filter, erheblich reduzieren lässt. Dies erhöht die Lebensdauer der nachgeschalteten Feinfilter, welche aufgrund ihrer Ölbelastung regelmäßig zu tauschen sind.

Gemäß einer besonders bevorzugten Ausführungsform kann vorgesehen sein, dass der wenigstens eine Filterdraht oder die wenigstens eine Filterfaser zumindest teilweise, vorzugsweise im Wesentlichen vollständig, aus Metall besteht, vorzugsweise aus Edelstahl oder Aluminium. Mit anderen Worten kann also vorgesehen sein, dass der Filtereinsatz aus einem Metallgestrick gebildet ist.

Eine besonders gute Filterwirkung kann erzielt werden, wenn durch eine geeignete Dimensionierung der wenigstens einen Leitvorrichtung und somit der daraus resultierenden vom Trägergas durchströmbaren Querschnittsflächen im wenigstens einen Filtereinsatz eine erhöhte Strömungsgeschwindigkeit des Trägergases von mindestens 0,6 m/s, vorzugsweise mindestens 0,9 m/s, erreicht wird. Die vom Trägergas durchströmbare bzw. durchströmte Querschnittsfläche kann dabei eine quer zu einem Strömungspfad des Trägergases durch den Filtereinsatz verlaufende Querschnittsfläche sein, durch die das Trägergas durch den Filtereinsatz strömen kann.

Die durch die Anordnung und Dimensionierung der Leitvorrichtungen bewirkte erhöhte Strömungsgeschwindigkeit des Trägergases im Filtereinsatz sollte jedoch unterhalb des sogenannten Flutpunktes des Filtereinsatzes liegen, also unterhalb jener Geschwindigkeit, ab der es zum Austragen von Tropfen aus dem Filtereinsatz kommt.

Erfindungsgemäß ist vorgesehen, dass entlang der Strömungsrichtung eine Mehrzahl von Filtereinsätzen hintereinander angeordnet ist. Zur Erzielung eines verlängerten, labyrinthartigen Strömungspfades des Trägergases durch die Mehrzahl der Filtereinsätze ist zwischen allen der hintereinander angeordneten Filtereinsätze wenigstens eine Leitvorrichtung angeordnet.

Erfindungsgemäß ist vorgesehen, dass durch die Leitvorrichtungen begrenzte Öffnungen in Strömungsrichtung betrachtet versetzt zueinander angeordnet sind und dass die durch die Öffnungen gebildeten vom Trägergas durchströmbaren Querschnittsflächen im Wesentlichen gleich groß sind. Durch die versetzte Anordnung der Öffnungen der jeweiligen Leitvorrichtungen ergibt sich in Bezug auf den Strömungspfad des Trägergases durch die Filtervorrichtung ein labyrinthartiger Aufbau, der die Wegstrecke des Strömungspfades entsprechend verlängert. Da die durchströmbaren Querschnittsflächen im Wesentlichen gleich groß sind, kann eine gleichbleibende Strömungsgeschwindigkeit des Trägergases durch die einzelnen Filtereinsätze erzielt werden.

Je nach Anwendungsfall kann es jedoch auch sinnvoll sein, die vom Trägergas durchströmbaren Querschnittsflächen und damit die Strömungsgeschwindigkeit des Trägergases entlang des Strömungspfades zu verändern (nicht erfindungsgemäß). So kann beispielsweise vorgesehen sein (nicht Teil der Erfindung), die Strömungsgeschwindigkeit durch Dimensionierung der Öffnungen beim Übergang vom ersten zum zweiten Filtereinsatz (in Strömungsrichtung betrachtet) zu erhöhen und beim Austritt aus dem zweiten Filtereinsatz wieder zu verringern.

Eine konstruktiv besonders einfach zu fertigende Variante kann vorsehen, dass das Gehäuse im Wesentlichen quaderförmig ausgebildet ist, wobei das Gehäuse eine Länge, eine Breite und eine Höhe aufweist. Vorzugsweise kann dabei vorgesehen sein, dass Länge zu Breite ein Verhältnis von etwa 1:1 bis 1:2 aufweisen und/oder Länge zu Höhe ein Verhältnis von etwa 2:1 bis 3:1 aufweisen. Je nach Anwendungsfall ist das Gehäuse mehr oder weniger mit Filtereinsätzen bestückt. So kann vorgesehen sein, dass die Länge des Gehäuses zu einer gesamten Filtereinsatzhöhe aller im Gehäuse befindlichen Filtereinsätze ein Verhältnis von etwa 2:1 bis 10:1 aufweist. Mit anderen Worten kann durchaus vorgesehen sein, dass nur ein Teil der Gehäusehöhe auch tatsächlich mit Filtereinsätzen bestückt ist - vorzugsweise ausgehend von der wenigstens einen Eintrittsöffnung des Gehäuses - und der Rest des Gehäuses leer bleibt.

Generell kann vorgesehen sein, dass eine Eintrittsfläche der wenigstens einen Eintrittsöffnung des Gehäuses quer zur Strömungsrichtung und/oder durch Leitvorrichtungen gebildete vom Trägergas durchströmbare Querschnittsflächen quer zur Strömungsrichtung mindestens 10% und/oder maximal 40%, vorzugsweise maximal 30%, eines lichten Gehäusequerschnitts quer zur Strömungsrichtung beträgt bzw. betragen. Dadurch können eine erhöhte Strömungsgeschwindigkeit des Trägergases und somit eine erhöhte Ölabscheidung im Filtereinsatz erzielt werden.

Vorzugsweise kann dabei vorgesehen sein, dass die wenigstens eine Filtervorrichtung zur Vertikalen geneigt angeordnet ist, wobei die Strömungsrichtung durch die Filtervorrichtung mit der Vertikalen einen Winkel von etwa 30° bis 90°, vorzugsweise im Wesentlichen 45°, einschließt. Besonders günstig ist es, wenn sich eine Eintrittsöffnung der Filtervorrichtung in Montagelage zumindest abschnittsweise zur Vertikalen geneigt erstreckt, vorzugsweise bis zu einem unteren Ende der Filtervorrichtung in Bezug auf die Vertikale. Die Eintrittsöffnung kann dabei vorzugsweise entlang einer Gehäusewand des Gehäuses der Filtervorrichtung verlaufen, wobei eine untere Kante der Gehäusewand mit der Vertikalen einen Winkel von etwa 30° bis 90°, vorzugsweise im Wesentlichen 45°, einschließt. Vorzugsweise kann dabei vorgesehen sein, dass auch die Leitvorrichtungen in der Filtervorrichtung entsprechend zur Vertikalen geneigt angeordnet sind, indem sie beispielsweise parallel zur Ebene der Eintrittsöffnung verlaufen.

Durch eine zur Vertikalen geneigte Anordnung der Filtervorrichtung des Ölnebelabscheiders kann das gezielte Abfließen des abgeschiedenen Öls entlang der Leitvorrichtungen bzw. Blenden zurück zur Eintrittsöffnung der Filtervorrichtung auf der Rohgasseite erzielt werden. Das Abfließen kann dabei aufgrund der Schwerkraft entlang der Leitvorrichtungen erfolgen, wodurch das Abfließverhalten verbessert werden kann, da der Ölrücklauf und die Gasströmung des Trägergases voneinander getrennt verlaufen.

Vorzugsweise kann vorgesehen sein, dass der Ölnebelabscheider in Bezug auf einen Strömungspfad des Trägergases vor der wenigstens einen Filtervorrichtung eine erste Gehäusekammer aufweist, die gegenüber einer Eintrittsfläche der wenigstens einen Eintrittsöffnung des Gehäuses der Filtervorrichtung eine erhöhte freie Strömungsfläche quer zum Strömungspfad des Trägergases aufweist. Es kann auch vorgesehen sein, dass der Ölnebelabscheider in Bezug auf einen Strömungspfad des Trägergases nach der wenigstens einen Filtervorrichtung eine zweite Gehäusekammer aufweist, die gegenüber einer Austrittsfläche der wenigstens einen Austrittsöffnung des Gehäuses der Filtervorrichtung eine erhöhte freie Strömungsfläche quer zum Strömungspfad des Trägergases aufweist.

Darüber hinaus wird auch Schutz begehrt für eine Brennkraftmaschine gemäß Anspruch 11, wobei vorzugsweise an deren Kurbelgehäuse ein vorgeschlagener Ölnebenabscheider angeordnet ist.

Weitere Einzelheiten und Vorteile der vorliegenden Erfindung werden anhand der nachfolgenden Figurenbeschreibung erläutert. Dabei zeigt bzw. zeigen:
- Fig. 1: eine schematische Schnittdarstellung durch eine Filtervorrichtung gemäß dem Stand der Technik,
- Fig. 2: eine schematische Schnittdarstellung durch ein Ausführungsbeispiel einer vorgeschlagenen Filtervorrichtung (nicht Teil der Erfindung),
- Fig. 3: eine Unteransicht auf die Filtervorrichtung gemäß Fig. 2,
- Fig. 4: eine schematische Schnittdarstellung durch ein Ausführungsbeispiel einer vorgeschlagenen Filtervorrichtung,
- Fig. 5: eine perspektivische Draufsicht auf ein weiteres Ausführungsbeispiel einer vorgeschlagenen Filtervorrichtung und
- Fig. 6: eine schematische Darstellung einer Brennkraftmaschine mit einem vorgeschlagenen Ölnebelabscheider, der eine vorgeschlagene Filtervorrichtung umfasst.

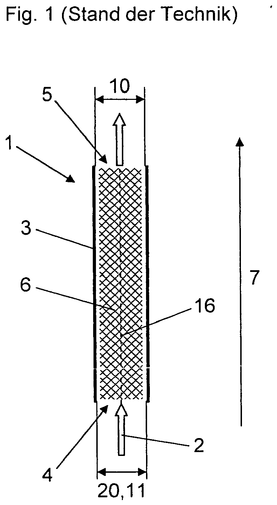

Fig. 1 zeigt in einer schematischen Schnittdarstellung eine Filtervorrichtung 1 gemäß dem Stand der Technik, umfassend ein Gehäuse 3 und einen im Gehäuse 3 angeordneten Filtereinsatz 6. Das Gehäuse 3 der Filtervorrichtung 1 weist eine Eintrittsöffnung 4 zum Einbringen eines Trägergases 2 in die Filtervorrichtung 1 sowie eine Austrittsöffnung 5 zum Ableiten des durch den Filtereinsatz 6 gefilterten Trägegases 2 aus der Filtervorrichtung 1 auf. Das Durchströmen des Trägergases 2 - aus dem flüssige Schwebeteilchen wie beispielsweise Öl abgeschieden werden sollen - durch den Filtereinsatz 6 entlang eines Strömungspfades 16 ist durch eine strichlierte Linie angedeutet. Ausgehend von der Eintrittsöffnung 4 bis hin zur Austrittsöffnung 5 durchströmt das Trägergas 2 die Filtervorrichtung 1 entlang einer Strömungsrichtung 7. Quer zur Strömungsrichtung 7 weist in diesem Beispiel das Gehäuse 3 einen im Wesentlichen rechteckförmigen Querschnitt auf, sodass sich quer zur Strömungsrichtung 7 ein rechteckförmiger, lichter Gehäusequerschnitt 10 ergibt. Die Eintrittsöffnung 4 des Gehäuses 3 weist quer zur Strömungsrichtung 7 eine ebenfalls rechteckförmige Eintrittsfläche 20 auf, die einer vom Trägergas 2 druchströmbaren Querschnittsfläche 11 entspricht.

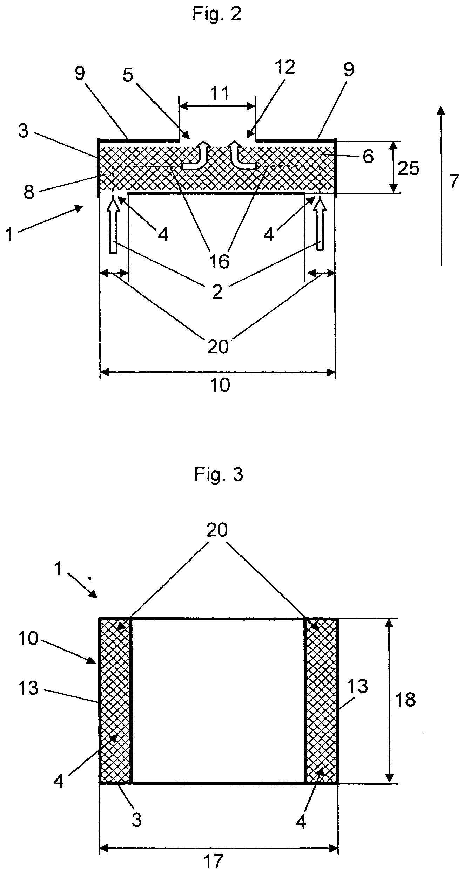

Fig. 2 zeigt eine schematische Schnittdarstellung durch ein nicht-erfindungsgemäßes Ausführungsbeispiel einer vorgeschlagenen Filtervorrichtung 1 zum Abscheiden von Öl aus einem Ölnebel bzw. Trägergas 2. Die Filtervorrichtung 1 umfasst ein Gehäuse 3, in dem ein Filtereinsatz 6 angeordnet ist. Der Filtereinsatz 6 ist in diesem Beispiel aus einem Drahtgestrick aus Edelstahldrähten gebildet, wobei die Filterdrähte 8 des Drahtgestricks einen Drahtdurchmesser kleiner 0,2 mm, vorzugsweise kleiner 0,1 mm, aufweisen. Das Gehäuse 3 weist in diesem Beispiel zwei Eintrittsöffnungen 4 auf, die quer zur Strömungsrichtung 7 in Summe eine Eintrittsfläche 20 bilden, durch die das Trägergas 2 in das Gehäuse 3 eintreten und entlang der Strömungspfade 16 durch den Filtereinsatz 6 durchströmen kann. Zwei Leitvorrichtungen 9, die in Strömungsrichtung betrachtet nach dem Filtereinsatz 6 am Gehäuse 3 angeordnet sind, begrenzen eine Öffnung 12, die in diesem Beispiel der Austrittsöffnung 5 des Gehäuses 3 entspricht, durch die das Trägergas 2 aus der Filtervorrichtung 1 austreten kann.

Durch Wahl geeigneter Größen der Eintrittsöffnungen 4 und somit durch Wahl einer geeigneten Eintrittsfläche 20 kann die Strömungsgeschwindigkeit des Trägergases 2 beeinflusst werden, wobei vorzugsweise die Eintrittsöffnungen 4 bzw. die Eintrittsfläche 20 so gewählt wird, dass die Strömungsgeschwindigkeit des Trägergases 2 durch den Filtereinsatz 6 mindestens 0,6 m/s, vorzugsweise mindestens 0,9 m/s, beträgt. Die Dicke des Filtereinsatzes 6 bzw. der Abstand 25 zwischen Eintrittsöffnungen 4 und Leitvorrichtungen 9 in Strömungsrichtung 7 betrachtet ist in diesem Beispiel so gewählt, dass die sich dadurch ergebende vom Trägergas 2 durchströmbare Querschnittsfläche quer zum Strömungspfad 16 durch den Filtereinsatz 6 im Wesentlichen halb so groß ist wie die durch die beiden Eintrittsöffnungen 4 gebildete Eintrittsfläche 20. Die durch die Öffnung 12 bzw. Austrittsöffnung 5 gebildete, vom Trägergas 2 durchströmbare Querschnittsfläche 11 ist in diesem Beispiel im Wesentlichen gleich groß gewählt wie die Eintrittsfläche 20 (gebildet durch die beiden Eintrittsöffnungen 4), sodass sich entlang der Strömungspfade 16 durch den Filtereinsatz 6 eine im Wesentlichen gleichbleibende Strömungsgeschwindigkeit des Trägergases 2 einstellt.

Fig. 3 zeigt eine Unteransicht der Filtervorrichtung 1 der Fig. 2. Wie in dieser Darstellung zu erkennen ist, weist die Grundfläche des Gehäuses 3 dieses Ausführungsbeispiels der Filtervorrichtung 1 eine rechteckförmige Ausbildung mit einer Länge 17 und einer Breite 18 auf. Die Eintrittsöffnungen 4, durch die das Trägergas 2 in die Filtervorrichtung 1 einströmen kann, verlaufen in diesem Beispiel entlang zweier Gehäusewände 13 des Gehäuses 3 und erstrecken sich über die gesamte Breite 18 des Gehäuses 3. Die beiden Eintrittsöffnungen 4 bilden in Summe eine Eintrittsfläche 20, durch die das Trägergas 2 in die Filtervorrichtung 1 einströmen kann.

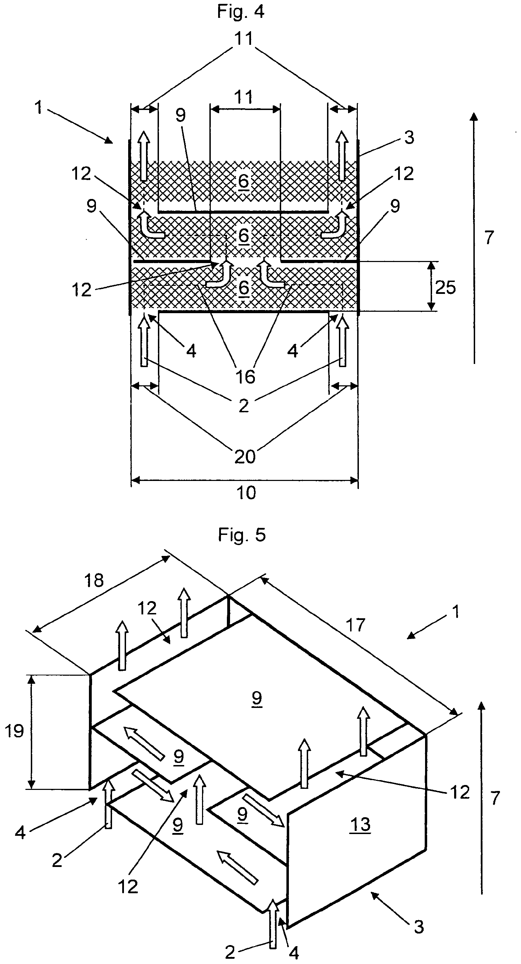

Fig. 4 zeigt ein weiteres Ausführungsbeispiel einer vorgeschlagenen Filtervorrichtung in einer schematischen Schnittdarstellung. Im Vergleich zum Ausführungsbeispiel der Fig. 2 sind hierbei in Strömungsrichtung 7 mehrere Filtereinsätze 6 hintereinander angeordnet. Zwischen den Filtereinsätzen 6 sind Leitvorrichtungen 9 am Gehäuse 3 angeordnet, durch die die Strömungspfade 16 des durch die Filtereinsätze 6 strömenden Trägergases 2 jeweils entsprechend umgelenkt werden. Die Leitvorrichtungen 9 - die im Wesentlichen senkrecht zur Strömungsrichtung 7 angeordnet sind - bilden dabei jeweils Öffnungen 12, die in Strömungsrichtung 7 betrachtet versetzt zueinander angeordnet sind. Dadurch ergibt sich insgesamt ein labyrinthartiger Aufbau, wodurch sich die Strömungspfade 16 entsprechend verlängern. In diesem Beispiel sind sowohl alle sich ergebenden vom Trägergas 2 durchströmbaren Querschnittsflächen 11, als auch die Eintrittsfläche 20 der Eintrittsöffnungen 4 im Wesentlichen gleich groß dimensioniert, wodurch sich eine im Wesentlichen gleichbleibende Strömungsgeschwindigkeit des Trägergases 2 entlang eines Strömungspfades 16 ergibt. Je nach Anwendungsfall (nicht Teil der Erfindung) kann es jedoch auch sinnvoll sein, die vom Trägergas 2 durchströmbaren Querschnittsflächen 11 und damit die Strömungsgeschwindigkeit des Trägergases 2 entlang des Strömungspfades 16 zu verändern. So kann beispielsweise vorgesehen sein (nicht erfindungsgemäß), die Strömungsgeschwindigkeit durch Dimensionierung der Öffnungen 12 beim Übergang zum zweiten Filtereinsatz 6 (in Strömungsrichtung 7 betrachtet) zu erhöhen und beim Austritt aus dem zweiten Filtereinsatz 6 wieder zu verringern.

Die Leitvorrichtungen 9 zwischen jeweils zwei Filtereinsätze 6 sind im gezeigten Beispiel in Strömungsrichtung 7 mit einem Abstand 25 am Gehäuse 3 angeordnet. Durch eine geeignete Wahl von Eintrittsfläche 20, vom Trägergas 2 durchströmbare Querschnittsflächen 11 und Abstände 25 zwischen den Leitvorrichtungen 9 kann Einfluss auf die Strömungsgeschwindigkeit des Trägergases 2 bei einem gegebenen Volumenstrom des Trägergases 2 genommen werden. Je nach Anwendungsfall wie z.B. mit einer Filtervorrichtung 1 auszustattenden Brennkraftmaschine können also die konstruktiv besonders einfach zu beeinflussenden Werte für Eintrittsfläche 20, vom Trägergas 2 durchströmbare Querschnittsflächen 11 und Abstände 25 angepasst werden, um eine optimale Filterwirkung zu erzielen. Insbesondere können durch Anpassung dieser Werte Filtervorrichtungen 1 für eine große Bandbreite von unterschiedlichen Brennkraftmaschinen bereitgestellt werden, die alle dieselben äußeren Gehäuseabmessungen aufweisen können.

Fig. 5 zeigt ein weiteres Beispiel einer vorgeschlagenen Filtervorrichtung 1 ähnlich der Fig. 4 in einer perspektivischen Oberansicht. Der Übersichtlichkeit halber wurden hierbei die Filtereinsätze 6 sowie eine stirnseitige Seitenwand des Gehäuses 3 ausgeblendet. Wie der Abbildung zu entnehmen ist, verlaufen die Eintrittsöffnungen 4 und die durch die Leitvorrichtungen 9 begrenzten Öffnungen 12 im Wesentlichen entlang der gesamten Breite 18 des Gehäuses 3. Deutlich ist auch der labyrinthartige innere Aufbau der Filtervorrichtung 1 zu erkennen, der durch die Leitvorrichtungen 9 erzielt wird.

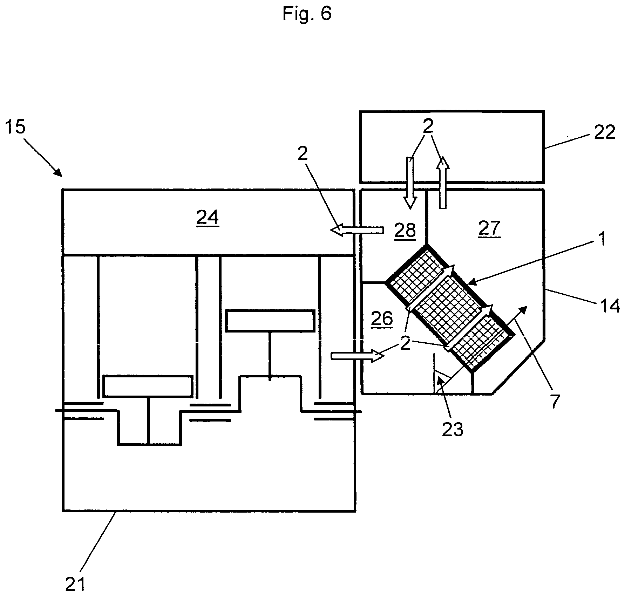

Fig. 6 zeigt eine schematische Darstellung einer Brennkraftmaschine 15, an deren Kurbelgehäuse 21 ein vorgeschlagener Ölnebelabscheider 14 mit einer vorgeschlagenen Filtervorrichtung 1 angeordnet ist. Bei der Brennkraftmaschine 15 kann es sich beispielsweise um einen Gasmotor handeln, bei dem über einen Lufteinlass 24 eine Ladeluft in bekannter Art und Weise eingebracht wird. Im Kurbelgehäuse 21 der Brennkraftmaschine 15 entstehendes Blow-By-Gas bzw. Trägergas 2 wird in den Ölnebelabscheider 14 geleitet. Nach dem Ölnebelabscheider 14, der als Vorfilter eingesetzt wird, gelangt das Trägergas 2 in einen Feinfilter 22, um kleinere Öltröpfchen, die vom Ölnebelabscheider 14 nicht abgeschieden werden können, aus dem Trägergas 2 zu entfernen. Nach dem Feinfilter 22 wird das Trägergas 2 - über eine abgesonderte Kammer 28 des Ölnebelabscheiders 14 - in den Lufteinlass 24 und somit der Ladeluft rückgeführt. Entlang dieses Strömungswegs erfolgt die Strömung des Trägergases 2 aufgrund der im Lufteinlass 24 vorherrschenden Druckbedingungen.

Im Ölnebelabscheider 14 ist eine Filtervorrichtung 1 angeordnet, die vom Trägergas 2 entlang einer Strömungsrichtung 7 durchströmt wird. Dabei wird ein im Trägergas 2 enthaltenes Öl zumindest teilweise abgeschieden. Durch eine entsprechend geneigte Anordnung der Filtervorrichtung 1, sodass die Strömungsrichtung 7 durch die Filtervorrichtung 1 zur Vertikalen mit einem Winkel 23 geneigt ist, kann das in der Filtervorrichtung 1 abgeschiedene Öl zielgerichtet, beispielsweise an einer der Einlassöffnungen 4 der Filtervorrichtung 1, abgelassen werden. Der Winkel 23 beträgt im gezeigten Beispiel etwa 45° zur Vertikalen.

Der hier gezeigte Ölnebelabscheider 14 weist vor und nach der Filtervorrichtung 1 Beruhigungszonen für das Trägergas 2 in Form einer ersten Gehäusekammer 26 und einer zweiten Gehäusekammer 27 auf. Sowohl erste Gehäusekammer 26 als auch zweite Gehäusekammer 27 weisen jeweils eine im Vergleich zur Eintrittsfläche 20 der wenigstens einen Eintrittsöffnung 4 der Filtervorrichtung 1 bzw. Austrittsfläche der wenigstens einen Austrittsöffnung 5 der Filtervorrichtung 1 erhöhte freie Strömungsfläche quer zum Strömungspfad des Trägergases 2 auf. Durch die dadurch verringerte Strömungsgeschwindigkeit des Trägergases 2 können einerseits in der ersten Gehäusekammer 26 große Öltropfen bereits vor der Filtervorrichtung 1 aus dem Trägergas 2 ausgeschieden werden und andererseits werden Öltropfen in der zweiten Gehäusekammer 27 nach der Filtervorrichtung 1 nicht durch eine zu hohe Strömungsgeschwindigkeit des Trägergases 2 mitgerissen.

Das im Ölnebelabscheider 14 vorgefilterte Trägergas 2 wird in weiterer Folge dem Feinfilter 22 zugeführt, wonach es über eine dritte Gehäusekammer 28 des Ölnebelabscheiders 14 dem Lufteinlass 24 der Brennkraftmaschine 15 rückgeführt wird.

## Patentansprüche

1. Ölnebelabscheider zum Abscheiden von in einem Trägergas (2), insbesondere Kurbelgehäuseentlüftungsgas einer Brennkraftmaschine (15), enthaltenem Öl, mit wenigstens einer Filtervorrichtung (1) zum Abscheiden von flüssigen Schwebeteilchen aus einem Trägergas (2), insbesondere zum Abscheiden von Öl aus einem Ölnebel, wobei die Filtervorrichtung (1) umfasst: ein Gehäuse (3) mit wenigstens einer Eintrittsöffnung (4) zum Einbringen des Trägergases (2) und wenigstens einer Austrittsöffnung (5) zum Ableiten des gefilterten Trägergases (2), wobei im Gehäuse (3) wenigstens ein Filtereinsatz (6) angeordnet ist, der vom Trägergas (2) entlang einer Strömungsrichtung (7) durchströmbar ist, wobei zur Erzielung eines verlängerten, labyrinthartigen Strömungspfades (16) des Trägergases (2) durch den wenigstens einen Filtereinsatz (6) wenigstens eine Leitvorrichtung (9) vorgesehen ist, durch die der Strömungspfad (16) umlenkbar ist, wobei die wenigstens eine Leitvorrichtung (9) wenigstens eine Öffnung (12) begrenzt, die eine vom Trägergas (2) durchströmbare Querschnittsfläche (11) bildet und wobei die wenigstens eine Filtervorrichtung (1) lösbar im Ölnebelabscheider (14) anordenbar ist und wobei vorzugsweise zwischen einer ersten Befestigungsfläche des Ölnebelabscheiders (14) und einer daran zu befestigenden zweiten Befestigungsfläche der Filtervorrichtung (1) eine - vorzugsweise im Wesentlichen umlaufende - Dichtung vorgesehen ist, **dadurch gekennzeichnet, dass** entlang der Strömungsrichtung (7) eine Mehrzahl von Filtereinsätzen (6) hintereinander angeordnet ist und dass zur Erzielung eines verlängerten, labyrinthartigen Strömungspfades (16) des Trägergases (2) durch die Mehrzahl der Filtereinsätze (6) zwischen allen der hintereinander angeordneten Filtereinsätze (6) wenigstens eine Leitvorrichtung (9) angeordnet ist, durch die der Strömungspfad (16) umlenkbar ist, und wobei durch die Leitvorrichtungen (9) begrenzte Öffnungen (12) in Strömungsrichtung (7) betrachtet versetzt zueinander angeordnet sind und die durch die Öffnungen (12) gebildeten, vom Trägergas (2) durchströmbaren Querschnittsflächen (11) im Wesentlichen gleich groß sind, sodass eine gleichbleibende Strömungsgeschwindigkeit des Trägergases (2) durch die einzelnen Filtereinsätze (6) erzielt wird.

2. Ölnebelabscheider nach Anspruch 1, **dadurch gekennzeichnet, dass** die wenigstens eine Leitvorrichtung (9) als - vorzugsweise plattenförmige - Blende ausgebildet ist.

3. Ölnebelabscheider nach Anspruch 1 oder 2, **dadurch gekennzeichnet, dass** die wenigstens eine Leitvorrichtung (9) am Gehäuse (3) angebracht, vorzugsweise angeschweißt, angeklebt oder angeschraubt, ist.

4. Ölnebelabscheider nach einem der Ansprüche 1 bis 3, **dadurch gekennzeichnet, dass** der wenigstens eine Filtereinsatz (6) aus einem Gewebe, Geflecht, Gestrick, Gewirk oder Vlies gebildet ist, das aus wenigstens einem Filterdraht (8) oder wenigstens einer Filterfaser mit einem Durchmesser kleiner 0,2 mm, vorzugsweise kleiner 0,1 mm, aufgebaut ist, wobei ein Volumenanteil des wenigstens einen Filterdrahts (8) oder der wenigstens einen Filterfaser im Filtereinsatz (6) vorzugsweise etwa 2% bis 5%, besonders bevorzugt im Wesentlichen 4%, beträgt..

5. Ölnebelabscheider nach einem der Ansprüche 1 bis 4, **dadurch gekennzeichnet, dass** das Gehäuse (3) im Wesentlichen quaderförmig ausgebildet ist, wobei das Gehäuse (3) eine Länge (17), eine Breite (18) und eine Höhe (19) aufweist, wobei Länge (17) zu Breite (18) vorzugsweise ein Verhältnis von etwa 1:1 bis 1:2 aufweisen und / oder Länge (17) zu Höhe (19) vorzugsweise ein Verhältnis von etwa 2:1 bis 3:1 aufweisen.

6. Ölnebelabscheider nach einem der Ansprüche 1 bis 5, **dadurch gekennzeichnet, dass** eine Eintrittsfläche (20) der wenigstens einen Eintrittsöffnung (4) des Gehäuses (3) quer zur Strömungsrichtung (7) und/oder durch Leitvorrichtungen (9) gebildete vom Trägergas (2) durchströmbare Querschnittsflächen (11) quer zur Strömungsrichtung (7) mindestens 10% und/oder maximal 40%, vorzugsweise maximal 30%, eines lichten Gehäusequerschnitts (10) quer zur Strömungsrichtung (7) beträgt bzw. betragen.

7. Ölnebelabscheider nach einem der Ansprüche 1 bis 6, **dadurch gekennzeichnet, dass** die wenigstens eine Filtervorrichtung (1) zur Vertikalen geneigt angeordnet ist, wobei die Strömungsrichtung (7) durch die Filtervorrichtung (1) mit der Vertikalen einen Winkel (23) von etwa 30° bis 90°, vorzugsweise im Wesentlichen 45°, einschließt.

8. Ölnebelabscheider nach einem der Ansprüche 1 bis 7, **dadurch gekennzeichnet, dass** sich eine Eintrittsöffnung (4) der Filtervorrichtung (1) in Montagelage zumindest abschnittsweise zur Vertikalen geneigt erstreckt, vorzugsweise bis zu einem unteren Ende der Filtervorrichtung (1) in Bezug auf die Vertikale.

9. Ölnebelabscheider nach einem der Ansprüche 1 bis 8, **dadurch gekennzeichnet, dass** der Ölnebelabscheider (14) in Bezug auf einen Strömungspfad (16) des Trägergases (2) vor der wenigstens einen Filtervorrichtung (1) eine erste Gehäusekammer (26) aufweist, die gegenüber einer Eintrittsfläche (20) der wenigstens einen Eintrittsöffnung (4) des Gehäuses (3) der Filtervorrichtung (1) eine erhöhte freie Strömungsfläche quer zum Strömungspfad (16) des Trägergases (2) aufweist.

10. Ölnebelabscheider nach einem der Ansprüche 1 bis 9, **dadurch gekennzeichnet, dass** der Ölnebelabscheider (14) in Bezug auf einen Strömungspfad (16) des Trägergases (2) nach der wenigstens einen Filtervorrichtung (1) eine zweite Gehäusekammer (27) aufweist, die gegenüber einer Austrittsfläche der wenigstens einen Austrittsöffnung (5) des Gehäuses (3) der Filtervorrichtung (1) eine erhöhte freie Strömungsfläche quer zum Strömungspfad (16) des Trägergases (2) aufweist.

11. Brennkraftmaschine (15), insbesondere Gasmotor, mit einem Ölnebelabscheider (14) nach einem der Ansprüche 1 bis 10, wobei vorzugsweise der Ölnebelabscheider (14) an einem Kurbelgehäuse (21) der Brennkraftmaschine (15) angeordnet ist.

## Claims

1. An oil mist separator (14) for separating off oil contained in a carrier gas (2), in particular crankcase venting gas of an internal combustion engine (15), comprising at least one filter device (1) for separating off liquid suspended particles from a carrier gas (2), in particular for separating off oil from an oil mist, wherein the filter device comprises: a housing (3) having at least one inlet opening (4) for introduction of the carrier gas (2) and at least one outlet opening (5) for discharge of the filtered carrier gas (2), wherein arranged in the housing (3) is at least one filter insert (6) through which the carrier gas (2) can flow along a flow direction (7), wherein to achieve a prolonged, labyrinth-like flow path (16) for the carrier gas (2) through the at least one filter insert (6) there is provided at least one guide device (9) by which the flow path (16) can be deflected, wherein the at least one guide device (9) has at least one opening (12) forming a cross-sectional area (11) through which the carrier gas (2) can flow, wherein the at least one filter device (1) can be arranged releasably in the oil mist separator (14) and wherein a - preferably substantially peripherally extending - seal is provided preferably between a first fixing surface of the oil mist separator (14) and a second fixing surface, to be fixed thereto, of the filter device (1), **characterised in that** a plurality of filter inserts (6) is arranged in succession along the flow direction (7) and wherein to achieve a prolonged, labyrinth-like flow path (16) for the carrier gas (2) through the plurality of filter inserts (6) between all of the successively arranged filter inserts (6), at least one guide device (9) is arranged by which the flow path (16) can be deflected, and wherein openings (12) delimited by the guide devices (9) are arranged in mutually displaced relationship considered in the flow direction (7), wherein the cross-sectional areas (11) formed by the openings (12) and through which the carrier gas (2) can flow are of substantially equal size to achieve that a carrier gas (2) flow speed through the individual filter inserts (6) remains the same.

2. Oil mist separator (14) as set forth in claim 1 **characterised in that** the at least one guide device (9) is in the form of a - preferably plate-shaped - baffle.

3. Oil mist separator (14) as set forth in claim 1 or claim 2 **characterised in that** the at least one guide device (9) is mounted to the housing (3), preferably by welding, adhesive or screwing.

4. Oil mist separator (14) as set forth in one of claims 1 through 3 **characterised in that** the at least one filter insert (6) is formed from a woven material, a mesh material, a knitted material, a fabric or a fleece made up of at least one filter wire (8) or at least one filter fiber of a diameter of less than 0.2 mm, preferably less than 0.1 mm, wherein a proportion by volume of the at least one filter wire (8) or the at least one filter fiber in the filter insert (6) preferably is between about 2% and 5%, in particular preferably being substantially 4%..

5. Oil mist separator (14) as set forth in one of claims 1 through 4 **characterised in that** the housing (3) is substantially cuboidal, wherein the housing (3) has a length (17), a width (18) and a height (19), wherein the length (17) to the width (18) preferably has a ratio of between about 1:1 and 1:2 abd / or the length (17) to the height (19) preferably has a ratio of between about 2:1 and 3:1.

6. Oil mist separator (14) as set forth in one of claims 1 through 5 **characterised in that** an inlet area (20) of the at least one inlet opening (4) of the housing (3) transversely relative to the flow direction (7) and/or cross-sectional areas (11) which are formed by guide devices (9) and through which the carrier gas (2) can flow transversely relative to the flow direction (7) is or are at least 10% and/or at a maximum 40%, preferably at a maximum 30%, of an internal housing cross-section (10) transversely relative to the flow direction (7).

7. An oil mist separator as set forth in one of the claims 1 through 6 **characterised in that** the at least one filter device (1) is arranged inclinedly relative to the vertical, wherein the flow direction (7) through the filter device (1) includes with the vertical an angle (23) of between about 30° and 90°, preferably substantially 45°.

8. An oil mist separator as set forth in one of the claims 1 through 7 **characterised in that** an inlet opening (4) of the filter device (1) extends inclinedly relative to the vertical at least portion-wise in the mounted position, preferably as far as a lower end of the filter device (1) in relation to the vertical.

9. An oil mist separator as set forth in one of claims 1 through 8 **characterised in that** the oil mist separator (14) has a first housing chamber (26) upstream of the at least one filter device (1) in relation to a flow path (16) of the carrier gas (2), which first housing chamber (26) has an increased free flow area transversely relative to the flow path (16) of the carrier gas (2) in relation to an inlet area (20) of the at least one inlet opening (4) of the housing (3) of the filter device (1).

10. An oil mist separator as set forth in one of claims 1 through 9 **characterised in that** the oil mist separator (14) has a second housing chamber (27) downstream of the at least one filter device (1) in relation to a flow path (16) of the carrier gas (2), which second housing chamber (27) has an increased free flow area transversely relative to the flow path (16) of the carrier gas (2) in relation to an outlet area of the at least one outlet opening (5) of the housing (3) of the filter device (1).

11. An internal combustion engine (15), in particular a gas engine, comprising an oil mist separator (14) as set forth in one of claims 1 through 10, wherein preferably the oil mist separator (14) is arranged at a crankcase (21) of the internal combustion engine (15).

## Revendications

1. Extracteur de brouillard d'huile pour l'extraction des huiles contenues dans un gaz porteur (2), en particulier du gaz de ventilation de carter d'un moteur à combustion (15), doté d'au moins un dispositif de filtre (1) pour l'extraction de particules suspendues liquides d'un gaz porteur (2), en particulier pour l'extraction de l'huile d'un brouillard d'huile, dans lequel le dispositif de filtre (1) comprend : un boîtier (3) doté d'au moins une ouverture d'admission (4) pour l'introduction du gaz porteur (2) et au moins une ouverture de sortie (5) pour la sortie du gaz porteur filtré (2), dans lequel au moins une cartouche filtrante (6) est agencée dans le boîtier (3), pouvant être traversée par le gaz porteur le long d'une direction de flux (7), dans lequel au moins un dispositif de guidage (9) est prévu afin d'obtenir un trajet de flux allongé de type labyrinthe (16) du gaz porteur (2) au travers de l'au moins une cartouche filtrante (6), au travers duquel le trajet de flux (16) est déviable, dans lequel l'au moins un dispositif de guidage (9) délimite au moins une ouverture, laquelle forme une section transversale (11) traversable par le gaz porteur (2) et dans lequel l'au moins un dispositif de filtre (1) peut être agencé de manière détachable dans l'extracteur de brouillard d'huile (14) et dans lequel un joint - de préférence essentiellement périphérique - est prévu de préférence entre une première surface de fixation de l'extracteur de brouillard d'huile (14) et une deuxième surface de fixation du dispositif de filtre (1) à fixer à la première surface, **caractérisé en ce que**, le long de la direction de flux (7) une pluralité de cartouches filtrantes (6) sont agencées l'une derrière l'autre et **en ce qu'**au moins un dispositif de guidage (9) est agencé entre toutes les cartouches filtrantes (6) agencées l'une derrière l'autre afin d'obtenir un trajet de flux allongé de type labyrinthe (16) du gaz porteur (2) au travers de la pluralité des cartouches filtrantes (6), au travers duquel le trajet de flux (16) est déviable, et dans lequel des ouvertures (12) délimitées par les dispositifs de guidage (9) sont agencées en décalage l'une par rapport à l'autre selon la direction de flux (7), et les sections transversales (11) formées par les ouvertures (12) et traversables par le gaz porteur (2) sont essentiellement de même taille, de sorte qu'une vitesse de flux constante du gaz porteur à travers les cartouches filtrantes (6) individuelles est obtenue.

2. Extracteur de brouillard d'huile selon la revendication 1, **caractérisé en ce que** l'au moins un dispositif de guidage (9) est conçu comme diaphragme, de préférence en forme de plaque.

3. Extracteur de brouillard d'huile selon la revendication 1 ou 2, **caractérisé en ce que** l'au moins un dispositif de guidage (9) est amené sur le boîtier, de préférence soudé, collé ou vissé.

4. Extracteur de brouillard d'huile selon l'une des revendications 1 à 3, **caractérisé en ce que** l'au moins une cartouche filtrante (6) est construite à partir d'un tissu, d'un tressage, d'un tricot, d'un tulle ou d'une nappe, constitué d'au moins un fil de filtrage (8) ou au moins une fibre de filtrage avec un diamètre inférieur à 0,2 mm, de préférence inférieur à 0,1 mm, dans lequel une fraction volumique de l'au moins un fil de filtrage (8) ou de l'au moins une fibre de filtrage dans la cartouche filtrante (6) est de préférence d'environ 2 % à 5 %, tout particulièrement d'essentiellement 4 %.

5. Extracteur de brouillard d'huile selon l'une des revendications 1 à 4, **caractérisé en ce que** le boîtier (3) est construit de manière essentiellement rectangulaire, dans lequel le boîtier (3) possède une longueur (17), une largeur (18) et une hauteur (19), dans lequel le rapport de la longueur (17) à la largeur (18) est de préférence d'environ 1:1 à 1:2 et/ou le rapport de la longueur (17) à la hauteur (19) est de préférence d'environ 2:1 à 3:1.

6. Extracteur de brouillard d'huile selon l'une des revendications 1 à 5, **caractérisé en ce qu'**une surface d'admission (20) de l'au moins une ouverture d'admission (4) du boîtier (3) représente transversalement à la direction de flux (7) et/ou les sections transversales (11) formées par les dispositifs de guidage (9) et traversables par le gaz porteur (2) représente transversalement à la direction de flux (7) au minium 10 % et/ou au maximum 40 %, de préférence au maximum 30 %, d'une section transversale évidée de boîtier (10) transversalement à la direction de flux (7).

7. Extracteur de brouillard d'huile selon l'une des revendications 1 à 6, **caractérisé en ce que** l'au moins un dispositif de filtre (1) est agencé de manière inclinée par rapport à la verticale, dans lequel la direction de flux (7) au travers du dispositif de filtre (1) forme avec la verticale un angle (23) d'environ 30° à 90°, de préférence essentiellement 45°.

8. Extracteur de brouillard d'huile selon l'une des revendications 1 à 7, **caractérisé en ce qu'**une ouverture d'admission (4) du dispositif de filtre (1) s'étend à l'état monté au moins partiellement de manière inclinée par rapport à la verticale, de préférence jusqu'à une extrémité inférieure du dispositif de filtre (1) par rapport à la verticale.

9. Extracteur de brouillard d'huile selon l'une des revendications 1 à 8, **caractérisé en ce que** l'extracteur de brouillard d'huile (14) comporte, avant l'au moins un dispositif de filtre (1) par rapport à un trajet de flux (16) du gaz porteur (2), un premier compartiment de boîtier (26), lequel comporte, à l'égard d'une surface d'admission (20) de l'au moins une ouverture d'admission (4) du boîtier (3) du dispositif de filtre (1), une surface de flux surélevée libre transversalement au chemin de flux (7) du gaz porteur (2).

10. Extracteur de brouillard d'huile selon l'une des revendications 1 à 9, **caractérisé en ce que** l'extracteur de brouillard d'huile (14) comporte, après l'au moins un dispositif de filtre (1) par rapport à un trajet de flux (16) du gaz porteur (2), un deuxième compartiment de boîtier (27), lequel comporte, à l'égard d'une surface de sortie de l'au moins une ouverture de sortie (5) du boîtier (3) du dispositif de filtre (1), une surface de flux surélevée libre transversalement au chemin de flux (7) du gaz porteur (2).

11. Moteur à combustion (15), en particulier moteur à essence, doté d'un extracteur de brouillard d'huile (14) selon l'une des revendications 1 à 10, dans lequel de préférence l'extracteur de brouillard d'huile (14) est agencé à un carter (21) du moteur à combustion (15).
